# EUROPEAN PATENT SPECIFICATION

(11) **EP 2 117 197 B1**
(45) Date of publication and mention of the grant of the patent: **25.03.2015**
(21) Application number: 07845931.0
(22) Date of filing: 14.12.2007
(51) Int. Cl.: H04W 76/02

(54) **METHOD FOR TRANSFERRING DATA USING HSDPA IN NON-CELL DCH STATE**
VERFAHREN ZUM TRANSFER VON DATEN UNTER VERWENDUNG VON HSDPA IM NON-CELL DCH ZUSTAND
PROCEDE POUR LE TRANSFERT DE DONNEES EN UTILISANT HSDPA DANS UN ETAT DCH NON CELL

(30) Priority: 01.02.2007 CN 200710002837
(43) Date of publication of application: 11.11.2009
(73) Proprietor: ZTE Corporation, Shenzhen, Guangdong 518057 (CN)
(72) Inventor: CHENG, Xiang, Shenzhen Guangdong 518057 (CN); KE, Yazhu, Shenzhen Guangdong 518057 (CN)
(74) Representative: Bokinge, Ole
(86) International application number: PCT/CN2007/003594
(87) International publication number: WO 2008/095376

(56) References cited:
- CN-A- 1 859 152
- CN-A- 1 897 752
- "3rd Generation Partnership Project; Technical Specification Group Radio Access Network; High Speed Downlink Packet Access: Iub/Iur protocol aspects (Release 5)", 3GPP TR 25.877 V5.1.0 (2002-06), 1 June 2002 (2002-06-01), pages 1-49, XP002707374,
- NOKIA: "L2 architecture and UE operation for Enhanced CELL_FACH state", 3GPP DRAFT; R2-070069_UE OPERATION AND L2 ARCHITECTURE FOR E-CELL-FACH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20070112, 12 January 2007 (2007-01-12), XP050133186, [retrieved on 2007-01-12]
- HUAWEI: "Discussion on CELL_FACH Transmission", 3GPP DRAFT; R2-070153, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20070112, 12 January 2007 (2007-01-12), XP050133261, [retrieved on 2007-01-12]
- 'High Speed Downlink Packet Access (HSDPA) (Release)' 3GPP TS 25.308 V5.7.0 31 December 2004, pages 1 - 28, XP008133867

## Description

### Technical Field

The present invention relates to a wireless communication system, and more specifically, to a method for data transfer using High Speed Downlink Packet Access characteristic in the state of non-CELL Dedicated Channel in a connection mode, as described in the independent claim.

### Background

Technology relating to the technical field is known from the document "3rd Generation Partnership Project; Technical Specification Group Radio Access Network; High Speed Downlink Packet Access: lub/lur protocol aspects (Release 5)", 3GPP TR 25.877 V5.1.0 (2002-06), 1 June 2002 (2002-06-01), pages 1-49. Relevant technologies are also known from the document NOKIA: "L2 architecture and UE operation for Enhanced CELL FACH state", 3GPP DRAFT, R2-070069, 12 january 2007. Two basic operation modes of mobile terminal are idle mode and connection mode, wherein, the connection mode can be further divided into four different states: (1) Universal mobile telecommunication system Radio access network Register area Paging Channel (URA-PCH) state; (2) CELL Paging Channel (CELL-PCH) state; (3) CELL Forward Access Channel (CELL_FACH) state; (4) CELL Dedicated Channel (CELL_DCH) state. These states further define the physical channels used by the mobile terminals and the types of transmission channels. Non CELL_DCH state in connection mode means the other three states of the connection mode, that is, CELL_FACH state, CELL_PCH state and URA_PCH state.

In present systems, the characteristic of High Speed Downlink Packet Access (HSDPA) is only used in CELL_DCH state. However, in order to improve the performance of data transmitting and receiving in non CELL_DCH state, the characteristic of HSDPA should also be introduced in non CELL_DCH state in connection mode.

In HSDPA, the High Speed Downlink Shared Channel (HS-DSCH) is used to carry the data sent by using HSDPA characteristics; the High Speed Shared Control Channel (HS-SCCH) is used to carry the physical control signaling for decoding on HS-DSCH; the HS-DSCH Radio Network Temporary Identifier (H-RNTI) is used as the special scrambling code of HS₋SCCH to indicate whether the data received by the terminal belongs to itself.

The specific process is: the terminal monitors the HS-SCCH sent by Node B of the access network and considers that the data is sent to itself if it detects from HS-SCCH that the scrambling code is the H-RNTI assigned to itself, and then it immediately starts to receive the data from HS-DSCH. H-RNTI is assigned by the RNC of the access network and informs Node B of the access network that Node B should use the H-RNTI corresponding to the data sent on HS-DSCH as scrambling code to scramble the data before the data is sent on HS-SCCH.

In the prior art, RNC notifies node B of H-RNTI of the corresponding receiving terminal and the relationship between the H-RNTI and the terminal dedicated context through Iub Interface control plane signaling, where the terminal dedicated context indirectly represents the data belonging to the terminal. The above-mentioned Iub Interface (IUB) is the interface between RNC and node B.

In non CELL-DCH state of connection mode, the RNC has no suitable control plane signaling to send and node B has no suitable terminal dedicated context to record. (1) For RNC: RNC could send the data which is to be sent to the air interface to node B through IUB interface user plane, although it knows, it has no way to notify node B of H-RNTI of the corresponding receiving terminal and the relationship between the H-RNTI and the terminal dedicated context through IUB interface control plane signaling by using the prior art; (2) For node B: node B receives data which is to be sent to the air interface, that is, the transmission block data or the protocol data units carried by the common transmission channel frame, from IUB interface user plane, however, it does not know or receive the H-RNTI corresponding to the data, that is, the H-RNTI of the corresponding receiving terminal, therefore, the data cannot be sent out through the air interface.

### Summary of the Invention

The present invention offers a method for transferring data using HSDPA in non CELL-DCH state to make node B obtain the H-RNTI or C-RNTI of the corresponding receiving terminal of the to-be-sent transmission block data or the protocol data units in non CELL-DCH state of connection mode and send the data out by using HSDPA through the air interface.

The features of the method according to the present invention are defined in the independent claim, and the preferable features according to the present invention are defined in the dependent claims.

The first above-mentioned technical problem is solved in the following way: offering a method for transferring data using HSDPA in non CELL-DCH state and using the common transmission channel frame to extra carry H-RNTI or C-RNTI, and the method comprises the following steps:
1.1) The RNC encapsulates the transmission blocks or the protocol data units of the downlink data and the H-RNTI or C-RNTI of the corresponding receiving terminal into the common transmission channel frames and sends them to node B through IUB interface;
1.2) Node B sends downlink data through the air interface according to the HSDPA characteristics after receiving and obtaining the transmission blocks or the protocol data units and the H-RNTI or C-RNTI of the corresponding receiving terminal;
1.3) the corresponding receiving terminal starts to receive the data transmitted on air interface HS-DSCH according to its H-RNTI or C-RNTI monitored through air interface HS-SCCH.

According to the method for transferring data offered by the present invention, said non CELL-DCH state means CELL_FACH state, CELL_PCH state and/or URA_PCH state.

According to the method for transferring data offered by the present invention, said common transmission channel frame means the data frame at the IUB interface from the Forward Access Channel (FACH), Paging Channel (PCH), HS-DSCH, and/or High Speed Forward Access Channel (HS-FACH).

According to the method for transferring data offered by the present invention, when the transmission blocks or the protocol data units carried by the common transmission channel frame are sent in HS-DSCH, the data should be sent after using the H-RNTI or C-RNTI carried by the common transmission frame as the scrambling code to scramble the data in HS-SCCH.

According to the method for transferring data offered by the present invention, Cell Radio Network Temporary Identifier (C-RNTI) can replace H-RNTI and have the same value range and occupied bits as H-RNTI has. C-RNTI means the C-RNTI assigned by the RNC to the transmission target terminal of the transmission blocks or the protocol data units carried by the common transmission channel frame.

According to the method for transferring data offered by the present invention, said H-RNTI or C-RNTI occupies 16bits and can be encapsulated in the header or payload of the common transmission channel frame, and its value is an integer within the range from 0 to 65535.

According to the method for transferring data offered by the present invention, said transmission blocks or the protocol data units are encapsulated in the payload of said common transmission channel frame.

According to the method for transferring data offered by the present invention, there is one said transmission block or protocol data unit which has one corresponding receiving terminal, and there is one said H-RNTI or C-RNTI, and meanwhile, the corresponding relationship is implicitly carried.

According to the method for transferring data offered by the present invention, there are several transmission blocks or protocol data units whose corresponding receiving terminals can be identical or not, and there might be one or more H-RNTIs or C-RNTIs, that is, the number of H-RNTIs or C-RNTIs carried by the common transmission channel frame is not greater than that of the transmission blocks or the protocol data units carried by the common transmission channel frame, that is, it can be equal to or less than the number of the transmission blocks or the protocol data units carried by the common transmission channel frame; For example, the number of said transmission blocks or the protocol data units is 3, and the number of said H-RNTIs or C-RNTIs is 2, where two transmission blocks or the protocol data units have the same corresponding receiving terminal.

According to the method for transferring data offered by the present invention, said corresponding relationship can also be directly encapsulated into the common transmission channel frame to be received and obtained by node B, now the corresponding relationship needs some bits to be encapsulated and explicitly carried.

According to the method for transferring data offered by the present invention, the encapsulating in step 1.1) is to encapsulate respectively the transmission blocks or the protocol data units and the H-RNTI or C-RNTI of the corresponding receiving terminal at correlated positions in the common transmission channel frame according to the corresponding relationship; the obtaining in step 1.2) also includes deriving the corresponding relationship between the said transmission blocks or the protocol data unit and H-RNTI or C-RNTI of the receiving terminal; at this time, the corresponding relationship does not occupy any bit, that is, to be implicitly carried.

According to the method for transferring data offered by the present invention, said implicitly carrying comprises but not is limited to the following three kinds:
(1) In said common transmission channel frame, said transmission block or protocol data unit is right before or after the H-RNTI or C-RNTI of the corresponding receiving terminal.
(2) In said common transmission channel frame, the transmission block or protocol data unit one-to-one corresponds to the H-RNTI or C-RNTI of the corresponding receiving terminal, several said transmission blocks or protocol data units are arranged orderly and can be positioned in the payload of said common transmission channel frame; the H-RNTIs or C-RNTIs of the corresponding receiving terminals are also arranged orderly and can be positioned in the header of said common transmission channel frame.
(3) In said common transmission channel frame, there is only one H-RNTI or C-RNTI of the receiving terminal, and all said transmission blocks or protocol data units included in the common transmission channel frame correspond to this H-RNTI or C-RNTI.

In the method for transferring data using HSDPA in non CELL-DCH state offered by the present invention, the common transmission channel frame is used to extra-carry H-RNTI or C-RNTI and implicitly carry the corresponding relationship between the H-RNTI or C-RNTI and the transmission blocks or protocol data units carried by the common transmission channel frame in non CELL-DCH state of connection mode, so as to make node B obtain this information, and thus the method has the following evident technical effects compared with the other feasible methods:
1. Offer a solution of using HSDPA characteristics to make node B obtain the H-RNTI and the corresponding relationship between the H-RNTI and the to-be-sent data in non CELL-DCH state of connection mode.
2. Use the user's plane characteristics to make the modification and the degree of affection as little as possible.

### Brief Description of Drawings

FIG. 1 illustrates the process of embodiment 1 in accordance with the present invention;
FIG. 2 illustrates the frame structure 1 of the common transmission channel frame in accordance with embodiment 1 of the present invention;
FIG. 3 illustrates the frame structure 2 of the common transmission channel frame in accordance with embodiment 1 of the present invention;
FIG. 4 illustrates the frame structure 3 of the common transmission channel frame in accordance with embodiment 1 of the present invention;
FIG. 5 illustrates the frame structure 4 of the common transmission channel frame in accordance with embodiment 1 of the present invention.

### Preferred Embodiments of the Present Invention

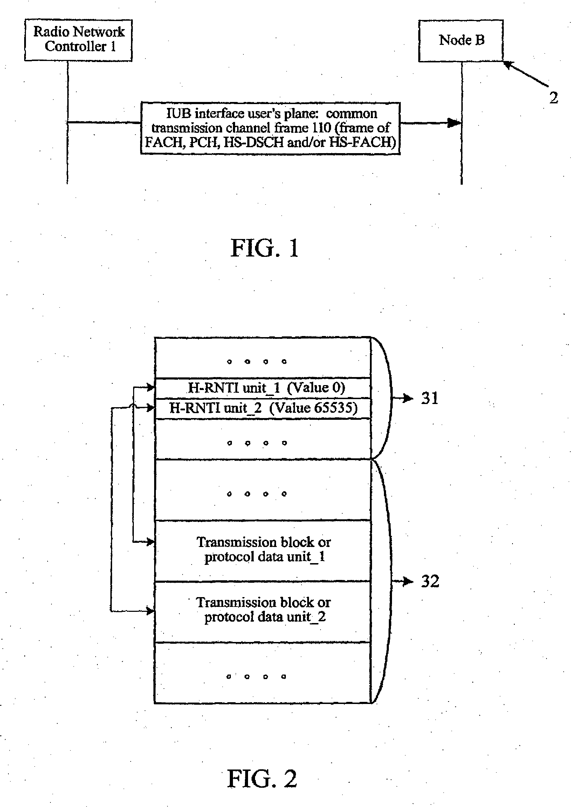

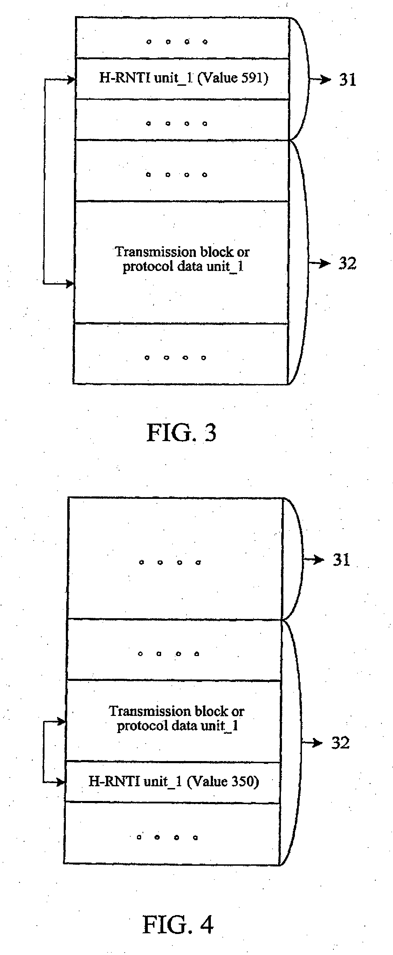

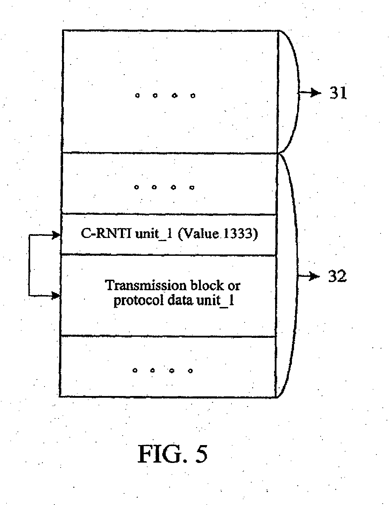

As shown in FIG. 1, embodiment 1 in accordance with the method of the present invention comprises the following steps: 110) RNC1 sends the common transmission channel frame extra-carrying H-RNTI and C-RNTI and carrying or implicitly carrying the corresponding relationship between the H-RNTI or C-RNTI and the transmission blocks or protocol data units carried by the common transmission channel frame to node B 2 through IUB interface user plane to make node B 2 have this information; wherein, the common transmission channel frame means the frame in FACH, PCH, HS-DSCH and/or HS-FACH; carrying is by way of encapsulation, while implicitly carrying includes but not is limited to the following kinds:
(1) Frame structure 1 of the common transmission channel frame, as shown in FIG. 2, includes frame header 31 and payload 32. Wherein, frame header 31 carries two H-RNTI units, the value of H-RNTI unit_1 at the first position is 0, and the value of H-RNTI unit_2 at the second position is 65535; the frame payload 32 carries two transmission blocks or protocol data units, the transmission block or protocol data unit_1 at the first position corresponds to the H-RNTI unit_1 at the first position, and the transmission block or protocol data unit_2 at the second position corresponds to the H-RNTI unit_2.
(2) Frame structure 2 of the common transmission channel frame, as shown in FIG. 3, includes frame header 31 and payload 32. Wherein, frame header 31 carries H-RNTI unit_1 whose value is 591; frame payload 32 carries transmission block or protocol data unit_1 corresponding to H-RNTI591.
(3) Frame structure 3 of the common transmission channel frame, as shown in FIG. 4, includes frame header 31 and payload 32. Wherein, frame payload 32 carries transmission block_1 or protocol data unit_1, and is right followed by H-RNIT unit_1 whose value is 350. The transmission block_1 or protocol data unit_1 corresponds to H-RNTI unit_1.
(4) Frame structure 4 of the common transmission channel frame, as shown in FIG 5, includes frame header 31 and payload 32. Wherein, frame payload 32 carries transmission block_1 or protocol data unit_1, and is right after C-RNIT unit_1 whose value is 1333. The transmission block_1 or protocol data unit_1 corresponds to C-RNTI unit_1.

### Industrial Applicability

In the method for transferring data using HSDPA in non CELL-DCH state offered by the present invention, the common transmission channel frame is used to extra-carry H-RNTI or C-RNTI and implicitly carry the information of the corresponding relationship between the H-RNTI or C-RNTI and the transmission blocks or protocol data units carried by the common transmission channel frame in non CELL-DCH state of connection mode, so as to make node B obtain this information, and the method has the following evident technical effects compared with the other feasible methods: 1) Offer a solution of using HSDPA characteristic to make node B obtain the H-RNTI and the corresponding relationship between the H-RNTI and the to-be-sent data in non CELL-DCH state of connection mode; 2) Use the user's plane characteristic to make the modification and the degree of affection as little as possible.

## Claims

1. A method for transferring data using High Speed Downlink Packet Access for data transfer in non CELL Dedicated Channel state, wherein, the method uses a common transmission channel frame to carry High Speed Downlink Shared Channel Radio Network Temporary Identifier or CELL Dedicated Channel Radio Network Temporary Identifier, and comprises the following steps of:
1.1) Radio Network Controller (1) encapsulating transmission blocks or protocol data units of downlink data and High Speed Downlink Shared Channel Radio Network Temporary Identifier or CELL Dedicated Channel Radio Network Temporary Identifier of a corresponding receiving terminal into common transmission channel frames and sending them to a node B (2) through an IUB interface;
1.2) Node B (2) sending the downlink data through an air interface according to High Speed Downlink Packet Access characteristic after receiving and obtaining the transmission blocks or the protocol data units and High Speed Downlink Shared Channel Radio Network Temporary Identifier or CELL Dedicated Channel Radio Network Temporary Identifier of the corresponding receiving terminal;
1.3) the corresponding receiving terminal starting to receive the data transmitted on an air interface High Speed Downlink Shared Channel according to its High Speed Downlink Shared Channel Radio Network Temporary Identifier or CELL Dedicated Channel Radio Network Temporary Identifier monitored through the air interface High Speed Shared Control Channel;
wherein the encapsulating in step 1.1) is to encapsulate respectively the transmission block or the protocol data unit and the High Speed Downlink Shared Channel Radio Network Temporary Identifier or CELL Dedicated Channel Radio Network Temporary Identifier of the corresponding receiving terminal at correlated positions in the common transmission channel frame according to a corresponding relationship; the obtaining in step 1.2) also includes deriving the corresponding relationship between the said transmission block or the protocol data unit and the High Speed Downlink Shared Channel Radio Network Temporary Identifier or CELL Dedicated Channel Radio Network Temporary Identifier of the receiving terminal.

2. A method of claim 1, wherein said common transmission channel frame means a data frame at the IUB interface from Forward Access Channel FACH, Paging Channel PCH, High Speed Downlink Shared Channel, and/or High Speed Forward Access Channel HS-FACH.

3. A method of claim 1, wherein said High Speed Downlink Shared Channel Radio Network Temporary Identifier or CELL Dedicated Channel Radio Network Temporary Identifier occupies 16 bits and can be encapsulated in a header (31) or a payload (32) of the common transmission channel frame.

4. A method of claim 1, wherein there is one said transmission block or protocol data unit which has one corresponding receiving terminal and there is one said High Speed Downlink Shared Channel Radio Network Temporary Identifier or CELL Dedicated Channel Radio Network Temporary Identifier.

5. A method of claim 1, wherein there are several transmission blocks or protocol data units whose corresponding receiving terminals can be identical or not, and there might be one or more High Speed Downlink Shared Channel Radio Network Temporary Identifiers or CELL Dedicated Channel Radio Network Temporary Identifiers.

6. A method of claim 1 or 4, wherein said corresponding relationship occupies some bits and can be directly encapsulated into the common transmission channel frame to be transmitted and to be received and obtained by the node B (2).

7. A method of claim 1, wherein, in said common transmission channel frame, said transmission block or protocol data unit is right before or after the High Speed Downlink Shared Channel Radio Network Temporary Identifier or CELL Dedicated Channel Radio Network Temporary Identifier of the corresponding receiving terminal.

8. A method of claim 1, wherein in said common transmission channel frame, the transmission block or protocol data unit one-to-one corresponds to High Speed Downlink Shared Channel Radio Network Temporary Identifier or CELL Dedicated Channel Radio Network Temporary Identifier of the corresponding receiving terminal, several said transmission blocks or protocol data units are arranged orderly, and the High Speed Downlink Shared Channel Radio Network Temporary Identifiers or CELL Dedicated Channel Radio Network Temporary Identifiers of the corresponding receiving terminals are also arranged orderly.

9. A method of claim 1, wherein in said common transmission channel frame, there is only one High Speed Downlink Shared Channel Radio Network Temporary Identifier or CELL Dedicated Channel Radio Network Temporary Identifier of the receiving terminal, and all said transmission blocks or protocol data units included in the common transmission channel frame correspond to the one High Speed Downlink Shared Channel Radio Network Temporary Identifier or CELL Dedicated Channel Radio Network Temporary Identifier.

## Patentansprüche

1. Verfahren zum Übertragen von Daten unter Verwendung von High Speed Downlink Packet Access zur Datenübertragung im Nicht-CELL-Dedicated-Channel-Zustand, wobei das Verfahren einen gemeinsamen Übertragungskanalrahmen verwendet, um einen temporären High-Speed-Downlink-Shared-Channel-Funknetz-Identifikator oder temporären CELL-Dedicated-Channel-Funknetz-Identifikator zu transportieren, und die folgenden Schritte umfasst:
1.1) Einkapseln von Übertragungsblöcken oder Protokolldateneinheiten von Downlinkdaten und temporärem High-Speed-Downlink-Shared-Channel-Funknetz-Identifikator oder temporärem CELL-Dedicated-Channel-Funknetz-Identifikator eines entsprechenden Empfangsendgerätes in gemeinsame Übertragungskanalrahmen und deren Senden zu einem Node B (2) über eine IUB-Schnittstelle durch Radio Network Controller (1);
1.2) Senden der Downlinkdaten über eine Luftschnittstelle gemäß High-Speed-Downlink-Packet-Access-Charakteristik nach Empfangen und Erhalten der Übertragungsblöcke oder der Protokolldateneinheiten und des temporären High-Speed-Downlink-Shared-Channel-Funknetz-Identifikators oder temporären CELL-Dedicated-Channel-Funknetz-Identifikators des entsprechenden Empfangsendgerätes durch Node B (2);
1.3) Beginnen durch das entsprechende Empfangsendgerät, die Daten zu empfangen, die auf einem Luftschnittstellen-High-Speed-Downlink-Shared-Channel gemäß seinem temporären High-Speed-Downlink-Shared-Channel-Funknetz-Identifikator oder temporären CELL-Dedicated-Channel-Funknetz-Identifikator übertragen werden, überwacht durch den Luftschnittstellen-High-Speed-Shared-Control-Channel;
wobei das Einkapseln in Schritt 1.1) dazu dient, jeweils den Übertragungsblock oder die Protokolldateneinheit und den temporären High-Speed-Downlink-Shared-Channel-Funknetz-Identifikator oder temporären CELL-Dedicated-Channel-Funknetz-Identifikator des entsprechenden Empfangsendgerätes an korrelierten Positionen im gemeinsamen Übertragungskanalrahmen gemäß einer entsprechenden Beziehung einzukapseln; das Erhalten in Schritt 1.2) auch Herleiten der entsprechenden Beziehung zwischen dem Übertragungsblock oder der Protokolldateneinheit und dem temporären High-Speed-Downlink-Shared-Channel-Funknetz-Identifikator oder temporären CELL-Dedicated-Channel-Funknetz-Identifikator des Empfangsendgerätes beinhaltet.

2. Verfahren nach Anspruch 1, wobei der gemeinsame Übertragungskanalrahmen einen Datenrahmen an der IUB-Schnittstelle vom Forward Access Channel FACH, Paging Channel PCH, High Speed Downlink Shared Channel und/oder High Speed Forward Access Channel HS-FACH bedeutet.

3. Verfahren nach Anspruch 1, wobei der temporäre High-Speed-Downlink-Shared-Channel-Funknetz-Identifikator oder temporäre CELL-Dedicated-Channel-Funknetz-Identifikator 16 Bits belegt und in einem Header (31) oder in Nutzdaten (32) des gemeinsamen Übertragungskanalrahmens eingekapselt werden kann.

4. Verfahren nach Anspruch 1, wobei es einen vorgenannten Übertragungsblock oder eine vorgenannte Protokolldateneinheit gibt, der/die ein entsprechendes Empfangsendgerät aufweist, und es einen vorgenannten temporären High-Speed-Downlink-Shared-Channel-Funknetz-Identifikator oder temporären CELL-Dedicated-Channel-Funknetz-Identifikator gibt.

5. Verfahren nach Anspruch 1, wobei es mehrere Übertragungsblöcke oder Protokolldateneinheiten gibt, deren entsprechende Empfangsendgeräte identisch sein können oder nicht, und es einen oder mehrere temporäre High-Speed-Downlink-Shared-Channel-Funknetz-Identifikatoren oder temporäre CELL-Dedicated-Channel-Funknetz-Identifikatoren geben könnte.

6. Verfahren nach Anspruch 1 oder 4, wobei die entsprechende Beziehung einige Bits belegt und direkt in den gemeinsamen Übertragungskanalrahmen eingekapselt werden kann, um gesendet zu werden und durch den Node B (2) empfangen und erhalten zu werden.

7. Verfahren nach Anspruch 1, wobei im gemeinsamen Übertragungskanalrahmen der Übertragungsblock oder die Protokolldateneinheit gerade vor oder nach dem temporären High-Speed-Downlink-Shared-Channel-Funknetz-Identifikator oder temporären CELL-Dedicated-Channel-Funknetz-Identifikator des entsprechenden Empfangsendgerätes liegt.

8. Verfahren nach Anspruch 1, wobei im gemeinsamen Übertragungskanalrahmen der Übertragungsblock oder die Protokolldateneinheit eins zu eins dem temporären High-Speed-Downlink-Shared-Channel-Funknetz-Identifikator oder temporären CELL-Dedicated-Channel-Funknetz-Identifikator des entsprechenden Empfangsendgerätes entspricht, mehrere vorgenannte Übertragungsblöcke oder Protokolldateneinheiten geordnet angeordnet sind und die temporären High-Speed-Downlink-Shared-Channel-Funknetz-Identifikatoren oder temporären CELL-Dedicated-Channel-Funknetz-Identifikatoren der entsprechenden Empfangsendgeräte ebenfalls geordnet angeordnet sind.

9. Verfahren nach Anspruch 1, wobei im gemeinsamen Übertragungskanalrahmen es nur einen temporären High-Speed-Downlink-Shared-Channel-Funknetz-Identifikator oder temporären CELL-Dedicated-Channel-Funknetz-Identifikator des Empfangsendgerätes gibt und alle vorgenannten Übertragungsblöcke oder Protokolldateneinheiten, die im gemeinsamen Übertragungskanalrahmen beinhaltet sind, dem einen temporären High-Speed-Downlink-Shared-Channel-Funknetz-Identifikator oder temporären CELL-Dedicated-Channel-Funknetz-Identifikator entsprechen.

## Revendications

1. Procédé pour transférer des données en utilisant un accès par paquets de liaison descendante à grande vitesse, HSDPA, pour un transfert de données dans un état de canal dédié non-CELL, dans lequel le procédé utilise une trame de canal de transmission commune pour porter un identifiant temporaire de réseau radio de canal partagé de liaison descendante à grande vitesse ou un identifiant temporaire de réseau radio de canal dédié CELL, et comprend les étapes suivantes :
1.1) un contrôleur de réseau radio (1) encapsule des blocs de transmission ou des unités de données de protocole de données de liaison descendante et un identifiant temporaire de réseau radio de canal partagé de liaison descendante à grande vitesse ou un identifiant temporaire de réseau radio de canal dédié CELL d'un terminal de réception correspondant dans des trames de canal de transmission communes et les envoie à un noeud B (2) par l'intermédiaire d'une interface IUB ;
1.2) le noeud B (2) envoie les données de liaison descendante par l'intermédiaire d'une interface hertzienne en fonction d'une caractéristique d'accès par paquets de liaison descendante à grande vitesse après la réception et l'obtention des blocs de transmission ou des unités de données de protocole et de l'identifiant temporaire de réseau radio de canal partagé de liaison descendante à grande vitesse ou de l'identifiant temporaire de réseau radio de canal dédié CELL du terminal de réception correspondant ;
1.3) le terminal de réception correspondant commence à recevoir les données transmises sur un canal partagé de liaison descendante à grande vitesse d'interface hertzienne en fonction de son identifiant temporaire de réseau radio de canal partagé de liaison descendante à grande vitesse ou de son identifiant temporaire de réseau radio de canal dédié CELL surveillé par l'intermédiaire du canal de commande partagé à grande vitesse d'interface hertzienne ;
dans lequel l'encapsulation à l'étape 1.1) consiste à encapsuler respectivement le bloc de transmission ou l'unité de données de protocole et l'identifiant temporaire de réseau radio de canal partagé de liaison descendante à grande vitesse ou l'identifiant temporaire de réseau radio de canal dédié CELL du terminal de réception correspondant à des positions corrélées dans la trame de canal de transmission commune en fonction d'une relation correspondante ; l'obtention à l'étape 1.2) comprend également la dérivation de la relation correspondante entre ledit bloc de transmission ou ladite unité de données de protocole et l'identifiant temporaire de réseau radio de canal partagé de liaison descendante à grande vitesse ou l'identifiant temporaire de réseau radio de canal dédié CELL du terminal de réception.

2. Procédé selon la revendication 1, dans lequel ladite trame de canal de transmission commune signifie une trame de données à l'interface IUB à partir d'un canal d'accès sans voie de retour, FACH, d'un canal de radiomessagerie, PCH, d'un canal partagé de liaison descendante à grande vitesse et/ou d'un canal d'accès sans voie de retour à grande vitesse, HS-FACH.

3. Procédé selon la revendication 1, dans lequel ledit identifiant temporaire de réseau radio de canal partagé de liaison descendante à grande vitesse ou ledit identifiant temporaire de réseau radio de canal dédié CELL occupe 16 bits et peut être encapsulé dans un en-tête (31) ou dans une charge utile (32) de la trame de canal de transmission commune.

4. Procédé selon la revendication 1, dans lequel il y a un dit bloc de transmission ou une dite unité de données de protocole qui a un terminal de réception correspondant et il y a un dit identifiant temporaire de réseau radio de canal partagé de liaison descendante à grande vitesse ou un dit identifiant temporaire de réseau radio de canal dédié CELL.

5. Procédé selon la revendication 1, dans lequel il y a plusieurs blocs de transmission ou plusieurs unités de données de protocole dont les terminaux de réception correspondants peuvent être identiques ou pas, et il peut y avoir un ou plusieurs identifiants temporaires de réseau radio de canal partagé de liaison descendante à grande vitesse ou un ou plusieurs identifiants temporaires de réseau radio de canal dédié CELL.

6. Procédé selon la revendication 1 ou 4, dans lequel ladite relation correspondante occupe certains bits et peut être directement encapsulée dans la trame de canal de transmission commune pour être transmise et pour être reçue et obtenue par le noeud B (2).

7. Procédé selon la revendication 1, dans lequel, dans ladite trame de canal de transmission commune, ledit bloc de transmission ou ladite unité de données de protocole est juste avant ou juste après l'identifiant temporaire de réseau radio de canal partagé de liaison descendante à grande vitesse ou l'identifiant temporaire de réseau radio de canal dédié CELL du terminal de réception correspondant.

8. Procédé selon la revendication 1, dans lequel, dans ladite trame de canal de transmission commune, le bloc de transmission ou l'unité de données de protocole correspond, un à un, à l'identifiant temporaire de réseau radio de canal partagé de liaison descendante à grande vitesse ou à l'identifiant temporaire de réseau radio de canal dédié CELL du terminal de réception correspondant, plusieurs blocs de transmission ou plusieurs unités de données de protocole sont agencés de manière ordonnée, et les identifiants temporaires de réseau radio de canal partagé de liaison descendante à grande vitesse ou les identifiants temporaires de réseau radio de canal dédié CELL des terminaux de réception correspondants sont également agencés de manière ordonnée.

9. Procédé selon la revendication 1, dans lequel, dans ladite trame de canal de transmission commune, il n'y a qu'un identifiant temporaire de réseau radio de canal partagé de liaison descendante à grande vitesse ou qu'un identifiant temporaire de réseau radio de canal dédié CELL du terminal de réception, et tous lesdits blocs de transmission ou toutes lesdites unités de données de protocole inclus dans la trame de canal de transmission commune correspondent à l'identifiant temporaire de réseau radio de canal partagé de liaison descendante à grande vitesse ou à l'identifiant temporaire de réseau radio de canal dédié CELL.
